# EUROPÄISCHE PATENTSCHRIFT

(11) **EP 0 521 309 B1**
(45) Veröffentlichungstag und Bekanntmachung des Hinweises auf die Patenterteilung: **31.05.1995**
(21) Anmeldenummer: 92109437.1
(22) Anmeldetag: 04.06.1992
(51) Int. Cl.: H02K 1/18

(54) **Elektrische Maschine, insbesondere Drehstromgenerator für Kraftfahrzeuge**
Electric machine, in particulier three-phase generator for automotive vehicles
Machine électrique, en particulier générateur triphasé pour véhicules automobiles

(30) Priorität: 01.07.1991 DE 4121734
(43) Veröffentlichungstag der Anmeldung: 07.01.1993
(73) Patentinhaber: ROBERT BOSCH GMBH, 70442 Stuttgart (DE)
(72) Erfinder: Fasterding, Henning, W-7145 Markgroeningen (DE); Bauer, Reiner, Dipl.-Ing., W-7101 Untergruppenbach (DE); Bilsing, Thomas, W-7120 Bietigheim (DE)

(56) Entgegenhaltungen:
- US-A- 1 431 620
- US-A- 1 446 898
- US-A- 4 673 835

## Beschreibung

### Stand der Technik

Die Erfindung geht aus von einer elektrischen Maschine, insbesondere von einem Drehstromgenerator für Kraftfahrzeuge nach der Gattung des Patentanspruchs 1.

Bei einem derartigen bekannten elektrischen Drehstromgenerator gemäß der DE-A-39 25 365 sind mehrere verstärkte Mittellamellen mit einem größeren Außendurchmesser sowie mit mehreren Befestigungsaugen versehen, mit denen das Ständerblechpaket zwischen den zwei Lagerschilden der Maschine festgespannt ist. Die Lagerschilde tragen die Kugellager eines Klauenpolläufers, der über eine Riemenscheibe von einer Brennkraftmaschine angetrieben wird. Die Lagerschilde werden außerdem am Außenumfang der größeren Mittellamellen zentriert, wobei sie abwechselnd an ihrem Außenumfang mit angeformten Überlappungsabschnitten über die Mittellamellen vorstehen. Im Bereich der Befestigungsschrauben liegen die Befestigungsaugen des Ständerblechpaketes beidseitig an Auflageflächen der Lagerschilde an.

Diese Lösung hat den Nachteil, daß in einem rauhen Betrieb bei Schüttelbeanspruchungen am Ständerblechpaket in dem Bereich zwischen den Befestigungsaugen Schwingungen auftreten können, die zu Verformungen bis hin zu einem Dauerbelastungsbruch sowie zu Brüchen an den Wicklungsanschlüssen führen können.

### Vorteile der Erfindung

Die erfindungsgemäße Befestigung des Ständerblechpaketes einer elektrischen Maschine nach den kennzeichnenden Merkmalen des Patentanspruchs 1 hat den Vorteil, daß die zur Befestigung verwendeten größeren Mittellamellen zwischen den benachbarten Befestigungsschrauben zusätzlich an Auflageschultern der Lagerschilde festgelegt sind, so daß bei Schüttelbeanspruchungen und dergleichen Eigenschwingungen und dadurch verursachte Dauerbelastungsbrüche vermieden werden. Ein weiterer Vorteil besteht darin, daß durch die nun nicht mehr mögliche Relativbewegung zwischen Ständerblechpaket und Lagerschilde bei Schüttelbeanspruchungen auch die Anschlußstellen der Ständerwicklung entlastet und dadurch verursachte elektrische Unterbrechungen vermieden werden.

Durch die in den Unteransprüchen aufgeführten Maßnahmen ergeben sich vorteilhafte Weiterbildungen und Verbesserungen der im Patentanspruch 1 angegebenen Merkmale. So ist es besonders vorteilhaft, für eine federnde Verspannung der Mittellamellen die Auflageschultern gegenüber den Auflageflächen im Bereich der Befestigungsschrauben des jeweiligen Lagerschildes etwas vorstehen zu lassen, so daß durch das Festspannen des Blechpaketes die größeren Mittellamellen zwischen den Auflageschultern in Achsrichtung der Maschine leicht wellenförmig elastisch deformiert eingespannt sind. Dabei bietet sich in vorteilhafter Weise an, daß die Auflageschultern jeweils in den die Mittellamellen außen übergreifenden Überlappungsabschnitten der Lagerschilde angeordnet sind, die am Umfang gleichmäßig verteilt abwechselnd ineinandergreifen. Ein weiterer Vorteil besteht darin, daß in den Überlappungsabschnitten der Lagerschilde Ständereinpässe eingearbeitet sind, die in ihrem Umfangsbereich je eine Zentrierfläche und in ihrem Stirnbereich jeweils eine Auflagefläche bilden. Um zwischen den wechselseitigen Auflageflächen der Mittellamellen einen ausreichenden Freiraum zu deren wellenförmigen elastischen Verspannung zu bekommen, erstrecken sich die Ständereinpässe zweckmäßigerweise jeweils nur über einen Teilbereich der Überlappungsabschnitte der Lagerschilde.

### Zeichnung

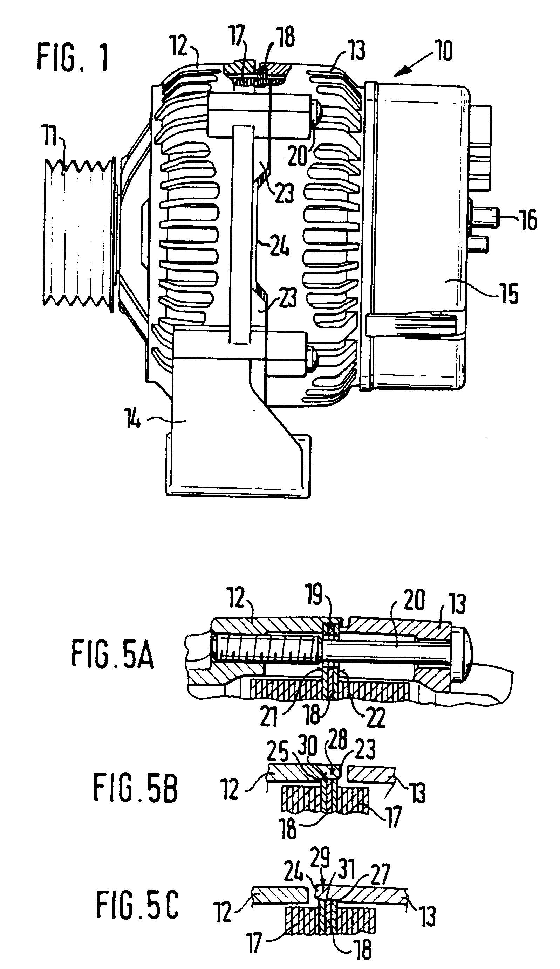

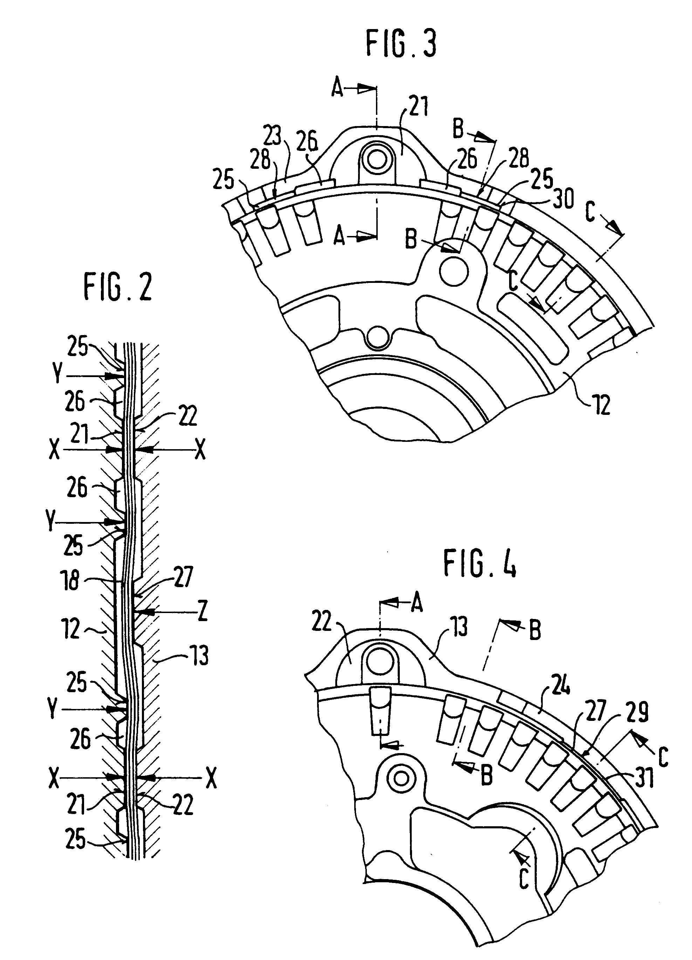

Ein Ausführungsbeispiel der Erfindung ist in der Zeichnung dargestellt und in der nachfolgenden Beschreibung näher erläutert. Es zeigen Figur 1 einen Drehstromgenerator für Kraftfahrzeuge, Figur 2 eine teilweise Abwicklung der größeren Mittellamellen des Ständerblechpakets eingespannt zwischen den Auflageflächen und Auflageschultern an den beiden Lagerschilden, Figur 3 und 4 zeigen je einen Ausschnitt der beiden abgenommenen Lagerschilde mit Blick auf deren einander gegenüberliegenden Stirnseiten gemäß Figur 1 und die Figuren 5A, 5B und 5C zeigen jeweils die Querschnitte des von den Lagerschilden eingespannten Ständerblechpakets nach der Linie A-A, B-B und C-C in Figur 3 und 4.

### Beschreibung des Ausführungsbeispieles

In Figur 1 ist ein Drehstromgenerator für Kraftfahrzeuge mit 10 bezeichnet, dessen Klauenpolläufer über eine Riemenscheibe 11 von der nicht dargestellten Brennkraftmaschine eines Kraftfahrzeugs anzutreiben ist. Der Klauenpolläufer ist in zwei Lagerschilden 12 und 13 aufgenommen, wobei das antriebsseitige Lagerschild 12 ein Schwenkarmlager 14 zur Befestigung des Drehstromgenerators 10 am Antriebsaggregat des Fahrzeugs aufweist. Am sogenannten bürstenseitigen Lagerschild 13 ist außen eine Schutzkappe 15 für eine nicht dargestellte Gleichrichter-Baueinheit, einen Regler sowie einen Bürstenhalter angebracht, wobei die Erregung des Klauenpolläufers über Kohlebürsten des Bürstenhalters und einer Schleifringanordnung am bürstenseitigen Ende des Klauenpolläufers mittels des erwähnten Reglers beim Betrieb des Generators geregelt wird. Über Anschlußklemmen 16 liefert der Drehstromgenerator 10 einen Gleichstrom in das Bordnetz des Kraftfahrzeugs.

Der Drehstromgenerator 10 ist mit einem aus Blechlamellen bestehenden Ständerblechpaket 17 ausgestattet, der die Ständerwicklungen der Maschine aufnimmt und mit dem Klauenpolläufer zusammenwirkt. Wie in dem Ausbruch im oberen Teil der Lagerschilde 12 und 13 erkennbar, ist das Ständerblechpaket mit mehreren stärkeren Mittellamellen 18 versehen, die einen größeren Außendurchmesser haben als die übrigen Bleche des Ständerblechpakets 17. Außerdem sind am Umfang dieser Mittellamellen 18 vier gleichmäßig verteilte Befestigungsaugen 19 (siehe Figur 5A) freigestanzt, an denen die zwei Lagerschilde 12, 13 mit den Schrauben 20 aufgenommen und festgeschraubt sind. Beide Lagerschilde 12 und 13 sind im Bereich dieser Schrauben 20 mit angefrästen Auflageflächen 21, 22 (siehe Figur 3 und 4) versehen, an denen das Ständerblechpaket 17 mit den Befestigungsaugen 19 der Mittellamellen 18 eingespannt ist. Die Lagerschilde 12 und 13 haben außerdem an den einander zugewandten Stirnseiten an ihrem Außenumfang jeweils zueinander versetzte Überlappungsabschnitte 23, 24, welche jeweils die Mittellamellen 18 des Ständerblechpakets 17 einfassen und abwechselnd ineinandergreifen.

In Figur 2 ist ein Teil einer Abwicklung der Mittellamellen 18 des Ständerblechpakets 17 mit den Auflagenflächen 21, 22 der Lagerschilde 12 und 13 dargestellt, wobei die dort durch die Dehnschrauben 20 auf die Mittellamellen 18 einwirkenden Einspannkräfte durch die Pfeile X dargestellt sind. Figur 3 zeigt, daß an dem antriebsseitigen Lagerschild 12 jeweils beidseitig neben dessen Auflageflächen 21 je eine Auflageschulter 25 für die Mittellamellen 18 des Ständerblechpaketes 17 im Lagerschild 12 eingearbeitet sind und daß zwischen dieser Auflagefläche 21 und den Auflageschultern 25 jeweils eine Aussparung 26 im Lagerschild 12 eingeformt ist. Aus Figur 4 ist erkennbar, daß am bürstenseitigen Lagerschild 13 im Überlappungsabschnitt 23 zwischen zwei Auflageflächen 22 für die Mittellamellen 18 jeweils eine weitere Auflageschulter 27 eingearbeitet ist. Aus Figur 2 ist erkennbar, daß die Auflageschultern 25 des Lagerschildes 12 die größeren Mittellamellen 18 jeweils von der linken Seite her abstützen und die Auflageschultern 27 des Lagerschildes 13 stützen die Mittellamellen 18 jeweils von der rechten Seite ab, so daß die Mittellamellen 18 zwischen diesen beidseitig versetzt angreifenden Auflageschultern 25 und 27 federnd verspannt sind. Die Auflageschultern werden durch spanabhebende Bearbeitung der Lagerschilde 12 und 13 so gestaltet, daß sie gegenüber den Auflageflächen 21 und 22 des jeweiligen Lagerschildes 12, 13 etwas in Axialrichtung vorstehen. Dadurch werden beim Festspannen des Blechpaketes 17 an den Mittellamellen 18 durch die Dehnschrauben 20 an den Auflageschultern 25 des Lagerschildes 12 axiale Kräfte in Pfeilrichtung Y und an den Auflageschultern 27 des Lagerschildes 13 entsprechend entgegengesetzte Kräfte in Pfeilrichtung Z wirksam, durch welche die Mittellamellen 18 zwischen den Auflageschultern 25 und 27 sowie zwischen den Auflageschultern 25 und den Auflageflächen 21 in Achsrichtung der Maschine leicht wellenförmig elastisch deformiert eingespannt werden.

Figur 5A zeigt im Querschnitt das durch die Dehnschraube 20 zwischen den Lagerschilden 12 und 13 eingespannte Befestigungsauge 19 der Mittellamellen 18 mit den Auflageflächen 21 und 22 im Schnitt A-A aus Figur 3 und 4. Figur 5B zeigt die Auflageschulter 25 des antriebsseitigen Lagerschildes 12 im Überlappungsabschnitt 23 neben der Auflagefläche 21 für die Mittellamellen 18 des Ständerblechpakets 17 sowie einen entsprechenden Abschnitt des bürstenseitigen Lagerschildes 13 im Querschnitt nach B-B aus Figur 3 und 4. Figur 5C zeigt schließlich eine der Auflageschultern 27 im Überlappungsbereich 24 des bürstenseitigen Lagerschildes 13 für die Mittellamellen 18 und den daran angrenzenden Bereich des anderen Lagerschilds 12 im Querschnitt nach C-C aus Figur 3 und 4.

Aus den Figuren 5B und 5C ist ferner erkennbar, daß in den Überlappungsabschnitten 23 und 24 der Lagerschilde 12 und 13 jeweils Ständereinpässe 28, 29 eingearbeitet sind, die in ihrem Umfangsbereich jeweils eine Zentrierfläche 30, 31 und in ihrem Stirnseitenbereich jeweils eine der Auflageschultern 25 bzw. 27 bilden. Wie Figur 2 deutlich macht, werden bei dieser Lösung die Mittellamellen 18 des Ständerblechpakets 17 als Federn verwendet, die den Gesamtverband federnd verspannen. Um dabei den Mittellamellen 18 an ihrem Umfang genügend Weg zur elastischen Deformierung zu geben, erstrecken sich die Ständereinpässen 28, 29 jeweils nur über einen Teilbereich der Überlappungsabschnitte 23, 24 der Lagerschilde 12, 13.

Durch diese neuartige Verspannung der Mittellamellen 18 werden Schwingungen am Ständerblechpaket 17 durch Schüttelbeanspruchungen zuverlässig vermieden und damit die mechanische Belastbarkeit der Maschine verbessert. Da in den Überlappungsabschnitten 23 und 24 der Lagerschilde 12 und 13 ohnehin die Zentrierflächen für die Mittellamellen eingedreht werden, können die zusätzlichen Auflageschultern 25 und 27 an den Lagerschilden 12 und 13 ohne Mehraufwand durch entsprechende Änderungen der Lagerschildaufnahmen gewonnen werden.

## Patentansprüche

1. Elektrische Maschine, insbesondere Drehstromgenerator (10) für Kraftfahrzeuge, mit einem aus Blechlamellen betehenden Ständerblechpaket (17) für die Ständerwicklung der Maschine, wobei mindestens eine der mittleren Blechlamellen (18) einen größeren Außendurchmesser sowie mehrere nach außen gerichtete, am Umfang gleichmäßig verteilte Befestigungsaugen (19) aufweist, an denen zwei Lagerschilde (12, 13) der Maschine mit Schrauben (20) aufgenommen und festgeschraubt sind, indem beide Lagerschilde (12, 13) im Bereich der Schrauben (20) mit Auflageflächen (21, 22) zum Einspannen des Blechpakets (17) an den Befestigungsaugen (19) der größeren Mittellamellen (18) versehen sind, dadurch gekennzeichnet, daß an einem der beiden Lagerschilde (12, 13) beidseitig neben dessen Auflageflächen (21) jeweils eine Auflageschulter (25) und an dem anderen der beiden Lagerschilde (13, 12) mitten zwischen dessen Auflageflächen (22) eine weitere Auflageschulter (27) vorgesehen ist, so daß die größeren Mittellamellen (18) zwischen diesen beidseitig versetzt angreifenden Auflageschultern (25, 27) federnd verspannt sind.

2. Elektrische Maschine nach Anspruch 1, dadurch gekennzeichnet daß die Auflageschultern (25, 27) gegenüber den Auflageflächen (21, 22) des jeweiligen Lagerschildes (12, 13) etwas vorstehen, so daß durch das Festspannen des Blechpakets (17) die größeren Mittellamellen (18) zwischen den Auflageschultern (25, 27) in Achsrichtung der Maschine leicht wellenförmig elastisch deformiert eingespannt sind.

3. Elektrische Maschine nach Anspruch 1 oder 2, dadurch gekennzeichnet, daß die Auflageschultern (25, 27) jeweils in einem die Mittellamellen (18) außen übergreifenden Überlappungsabschnitt (23, 24) der Lagerschilde (12, 13) angeordnet sind, welche abwechselnd ineinandergreifen.

4. Elektrische Maschine nach Anspruch 3, dadurch gekennzeichnet, daß in den Überlappungsabschnitten (23, 24) Ständereinpässe (28, 29) eingearbeitet sind, welche zur Zentrierung der Lagerschilde (12, 13) die größeren Mittellamellen (18) an ihrem Außenumfang von beiden Seiten her abwechselnd mit Zentrierflächen (30, 31) einfassen.

5. Elektrische Maschine nach Anspruch 4, dadurch gekennzeichnet, daß die Ständereinpässe (28, 29) in ihrem Umfangsbereich jeweils eine Zentrierfläche (30, 31) und im Stirnseitenbereich jeweils eine Auflageschulter (25, 27) bilden.

6. Elektrische Maschine nach Anspruch 5, dadurch gekennzeichnet, daß sich die Ständereinpässe (28, 29) jeweils nur über einen Teilbereich der Überlappungsabschnitte (23, 24) der Lagerschilde (12, 13) erstrecken.

## Claims

1. Electric machine, in particular three-phase generator (10) for motor vehicles, having a laminated stator core (17), consisting of core laminations, for the stator winding of the machine, at least one of the central core laminations (18) having a larger external diameter and a plurality of outwardly directed attachment eyelets (19) which are distributed uniformly over the circumference and at which two end shields (12, 13) of the machine are received and screwed tight with screws (20), in that both end shields (12, 13) are provided in the region of the screws (20) with support faces (21, 22) for clamping in the laminated core (17) to the attachment eyelets (19) of the larger centre laminations (18), characterized in that on one of the two end shields (12, 13) in each case a support shoulder (25) is provided on each side next to the support faces (21) of the said end shield (12, 13) and on the other one of the two end shields (13, 12) a further support shoulder (27) is provided in the centre between the support faces (22) of the said end shield (12, 13) so that the larger centre laminations (18) are clamped in a sprung fashion between these support shoulders (25, 27) which engage on each side in an offset manner.

2. Electric machine according to Claim 1, characterized in that the support shoulders (25, 27) protrude somewhat in relation to the support faces (21, 22) of the respective end shield (12, 13) so that by clamping tight the laminated core (17) the larger centre laminations (18) are clamped in between the support shoulders (25, 27) slightly elastically deformed in a wave shape in the axial direction of the machine.

3. Electric machine according to Claim 1 or 2, characterized in that the support shoulders (25, 27) are arranged in each case in an overlapping section (23, 24), which also engages over the centre laminations (18) on the outside, of the end shields (12, 13) which engage in one another alternately.

4. Electric machine according to Claim 3, characterized in that the stator slots (28, 29) are provided in the overlapping sections (23, 24) and they alternately grasp the larger centre laminations (18) on their outer circumference with centring faces (30, 31) from both sides, in order to centre the end shields (12, 13).

5. Electric machine according to Claim 4, characterized in that the stator slots (28, 29) form in each case a centring face (30, 31) in their circumferential area and in each case a support shoulder (25, 27) in the end side area.

6. Electric machine according to Claim 5, characterized in that the stator slots (28, 29) extend in each case only over a partial region of the overlapping sections (23, 24) of the end shields (12, 13).

## Revendications

1. Machine électrique, en particulier générateur de courant triphasé (10) pour véhicules automobiles, avec un paquet de tôles de stator (17) constitué de lamelles de tôle pour l'enroulement de stator de la machine, au moins l'une des lamelles de tôle médianes (18) ayant un diamètre externe plus important ainsi que plusieurs oeillets de fixation (19) dirigés vers l'extérieur et répartis uniformément sur la périphérie, contre lesquels deux flasques de paliers (12, 13) de la machine sont maintenus par des vis (20) et vissés à bloc, cependant que les deux flasques de paliers (12, 13) sont munis, au voisinage des vis (20), de surfaces d'appui (21, 22) pour serrer le paquet de tôles (17) contre les oeillets de fixation (19) des plus grandes lamelles médianes (18), machine électrique caractérisée en ce que, sur l'un des deux flasques de paliers (12, 13), de part et d'autre à côté de ses surfaces d'appui (21), est respectivement prévu un épaulement d'appui (25), tandis que sur l'autre des deux flasques de paliers (13, 12), au milieu entre leurs surfaces d'appui (22), est prévu un autre épaulement d'appui (27), de sorte que les plus grandes lamelles médianes (18) sont déformées élastiquement entre ces épaulements d'appui (25, 27) venant en prise de façon décalée des deux côtés.

2. Machine électrique selon la revendication 1, caractérisée en ce que les épaulements d'appui (25, 27) font quelque peu saillie par rapport aux surfaces d'appui (21, 22) du flasque de palier correspondant (12, 13), de sorte que, du fait du serrage à bloc du paquet de tôles (17), les lamelles médianes les plus grandes (18) sont serrées entre les épaulements d'appui (25, 27) en étant légèrement déformées élastiquement pour former des ondulations en direction axiale de la machine.

3. Machine électrique selon la revendication 1 ou la revendication 2, caractérisée en ce que les épaulements d'appui (25, 27) sont respectivement disposés sur une partie de recouvrement (23, 24) s'étendant extérieurement sur les lamelles (18), des flasques de paliers (12, 13) venant alternativement en prise l'un dans l'autre.

4. Machine électrique selon la revendication 3, caractérisée en ce que, sur les parties de recouvrement (23, 24), sont ménagés des adaptateurs de stator (28, 29) qui, pour centrer les flasques de paliers (12, 13), entourent les plus grandes lamelles médianes (18) sur leur périphérie externe, alternativement à partir des deux côtés, par des surfaces de centrage (30, 31).

5. Machine électrique selon la revendication 4, caractérisée en ce que les adaptateurs (28, 29) forment sur leur zone périphérique respectivement une surface de centrage (30, 31), et sur leur zone côté frontal respectivement un épaulement d'appui (25, 27).

6. Machine électrique selon la revendication 5, caractérisée en ce que les adaptateurs de stator (28, 29) s'étendent respectivement sur une zone partielle seulement des parties de recouvrement (23, 24) des flasques de paliers (12, 13).
